# EUROPEAN PATENT SPECIFICATION

(11) **EP 2 743 500 B1**
(45) Date of publication and mention of the grant of the patent: **10.03.2021**
(21) Application number: 12197385.3
(22) Date of filing: 16.12.2012
(51) Int. Cl.: F03D 17/00, F03D 7/04, F03D 7/02

(54) **SYSTEM FOR MANAGING A FATIGUE LIFE DISTRIBUTION, METHOD OF OPERATING A PLURALITY OF WIND TURBINES**
SYSTEM ZUR VERWALTUNG DER ERMÜDUNGSBESTÄNDIGKEITSVERTEILUNG, VERFAHREN ZUM BETRIEB MEHRERER WINDTURBINEN
SYSTÈME DE GESTION D'UNE DISTRIBUTION DE LONGÉVITÉ À LA FATIGUE, PROCÉDÉ DE FONCTIONNEMENT D'UNE PLURALITÉ D'ÉOLIENNES

(43) Date of publication of application: 18.06.2014
(73) Proprietor: Adwen GmbH, 27572 Bremerhaven (DE)
(72) Inventor: Bergholz, Steffen, 91056 Erlangen (DE); Lang, Hermann, 91056 Erlangen (DE); Irschik, Kai, 27624 Lintig (DE)
(74) Representative: Aspacher, Karl-Georg

(56) References cited:
- EP-A2- 1 790 851
- EP-A2- 2 525 087
- WO-A1-2008/043762
- WO-A1-2009/053365
- WO-A2-2009/133161
- US-A1- 2011 175 353

## Description

### FIELD OF THE INVENTION

The invention relates to a system for managing a fatigue life distribution as defined in claim 1 and to a method of operating a plurality of wind turbine generators as defined in claim 2.

### BACKGROUND

As generally known in the art, wind turbines, also referred to as wind driven power plants or wind power plants, have a supporting structure carrying a nacelle, the nacelle panelling, a gearbox, a generator and a rotor together with rotor blades. The wind turbine generator structure, for example the supporting structure or tower, the blades, the foundation or a component of the drive train, is exposed to stochastic cyclic loads. This is due to the stochastic character of the wind. If the wind turbine generator is an offshore plant, there are additional loads, which are due to the motion of the sea.

The cyclic loads lead to fatigue of the wind turbine generator structure. In order to determine a lifetime or maintenance intervals of this structure, analysis of the impacting loads is needed.

According to the prior art, a fatigue of a wind turbine generator structure is assessed based on predetermined load profiles. These profiles are compared with the effective conditions, for example with the effective weather conditions. A load profile for a wind turbine generator is predicted by comparing the effective conditions with the theoretical assumptions in the load profile. However, according to this approach, the particular situation of an individual wind turbine generator is not determined.

For a more detailed analysis some parts of interest of the structure of a wind turbine generator may be monitored. The monitored parts are provided with strain gauges so as to determine a level of strain or stress of the particular component. However, strain gauges tend to drift of measurement values. Furthermore, the fatigue monitoring is limited to the particular component, which is provided with the strain gauges.

Document DE 10 2005 031 436 A1 discloses a surveillance system for the supporting structure of a wind turbine generator. The system comprises a plurality of vibration sensors for determination of an oscillation of the wind turbine generator structure. The eigenfrequency is determined and an effective stiffness matrix is calculated from the analysis of the oscillation of the wind turbine generator structure. The effective parameters of the stiffness matrix are compared with initial parameters of the stiffness matrix. In case of incipient fatigue, the effective parameters of the stiffness matrix will deviate from their initial values. This deviation indicates a level of fatigue of the supporting structure. However, fatigue is detected after initial damage. Prior to occurrence of first damages, there is no possibility for detection of fatigue.

WO 2009/133161 A2 discloses a diagnosis system having a finite element model of a wind generator gearbox which is also applicable to various other parts of the wind generator. Measurement data of the sensors serves as input for the finite element model. Forces and moments, which act on arbitrary parts of the gearbox at any location thereof, can be calculated. Based on the computed results, a predicted damage sustained by each component of the gearbox during operation can be calculated.

EP 1 790 851 A2 discloses a wind park control system for distributing the fatigue load among a plurality of wind turbines. The aim of the system is to dynamically control the wind generators in response to the approaching wind field. An anticipatory control of the downstream wind generators is performed in response to the conditions, which presently impact an upstream wind generator. When for example a gust of wind impacts the wind park, the pitch angle of the downstream wind generators can be changed towards the feathering position to reduce the load. However, fatigue load management is only performed during a time period of restricted power generation of the wind park. The output power of the wind generators is controlled in that more power is generated by turbines having a lower fatigue load. The fatigue load distribution is only performed during a limited period of time, i. e. when the power generation of the wind park is restricted. The fatigue load is therefore only an actual fatigue load. In the previously mentioned prior art, the fatigue load distribution is only performed with respect to a present and actual situation.

Accoriding to WO 2009/053365 A1 and WO 2008/043762 A1 the calculated values of a model are compared to measurement data. A deviation between the theoretical values and the measurement data indicates the level of fatigue of the observed component. This approach inevitably requires certain initial fatigue damage. Further prior art is known from US 2011/175353 A1.

### SUMMARY

It is an object of the invention to provide a system for managing a fatigue distribution of a plurality of wind turbine generators. It is another object of the invention to provide a method of operating a plurality of wind turbine generators.

The object is achieved by the subject matter of the independent claims.

In one aspect of the description, a device for fatigue monitoring of a wind turbine generator structure of a wind turbine generator is provided. The device comprises at least one sensor for determining at least one time dependent value of a displacement of a measurement point, which is arranged on the wind turbine generator structure. In particular, the device may comprise a plurality of sensors for determining a plurality of time dependent values of a displacement of a variety of measurement points. Furthermore, the device comprises a control unit for determining a dynamic movement of the wind turbine generator structure. In particular, the control unit, which may be a work station, a computer, a microcontroller or any other suitable device, comprises a storage medium having a calculation model of the wind turbine generator structure stored thereon. The dynamic movement of the wind turbine generator structure may be simulated based on said calculation model, which may be a numerical model, for example a finite element model.

At least one time dependent value for the displacement of the at least one measurement point is applied as input data for determination of the dynamic movement of the wind turbine generator structure. The control unit may be configured to determine a load in a cross section of an observed component of the wind turbine generator structure, based on data for the dynamic movement. The load in the cross section of the observed component may be an internal load. The observed component, which may be an arbitrary component or structural part of the wind turbine generator structure, may be further positioned at an arbitrary position in the wind turbine generator structure.

Within the context of this specification, the wind turbine generator structure is for example the supporting structure or tower of a wind generator. Furthermore, the wind turbine generator structure may be one or a plurality of rotor blades, the foundation or one or more component(s) of the drive train of the wind generator. The wind turbine generator structure is exposed to stochastic cyclic loads and it is a fatigue loaded structure.

There is no geometrically fixed correlation between the position of the observed component and the measurement point. For example, the measurement point may be arranged at or near to the observed component. However, the measurement point may be arranged on the turbine generator structure to have a distance to the observed component.

Furthermore, the control unit may be configured to determine a stress time series, which is based on the time series for the load in a cross section of the observed component. A section load time series may be multiplied with special unit load cases, which were analyzed on calculation models for getting a stress time series (for example a complete stress tensor) of the observed components. The stress time series is analyzed so as to assess a grade of the fatigue damage, in particular a level of fatigue, of the observed component. Naturally, an individual or a plurality of values for a fatigue or an individual or a plurality of levels of fatigue may be determined for an individual or a plurality of observed components of the wind turbine generator structure.

The monitoring of the fatigue damage mechanism ensures very early information about the probability of fatigue cracks. Thereto, the total fatigue usage factor is a measure for that effect and this factor may be calculated as a level of fatigue. The total fatigue usage factor depends on the variable loads over time on the wind turbine generator and the structural response (inner stresses) on themselves. Furthermore, the total fatigue usage factor is the accumulation of all partial fatigue usage factors. The partial fatigue usage factor is calculated by the relation between the actual numbers of occurrences divided by the allowed number of occurrences. The allowed number of occurrences is depending on the stress range within a loading cycle and it is defined in the fatigue curve (Wohler curve). The limit of the total usage factor is typically defined to 1 or 100%. In the following the term "fatigue" may be understood within a sense of a total fatigue usage factor.

The device for fatigue monitoring is suitable for early determination of fatigue and prediction of damage or risk for failure of certain components of the wind turbine generator structure.

Advantageously, the device for fatigue monitoring according to aspects of the description allows capture and analysis of the inner true loads and stresses and operation demands of a particular wind turbine generator. A detailed precise level of fatigue or structural deterioration may be determined. Furthermore, analysis of fatigue is not limited to certain and predetermined observed components of the wind turbine generator structure of the wind turbine generator. There is a set of input data, based on which a simulation of the true movement of a particular wind turbine generator structure is determined. An observed component or a plurality of observed components is / are a part of this simulation of the dynamic movement of the wind turbine generator structure. An individual level of stress and fatigue may be determined for each component, which forms part of the model. A particular observed component may be selected by the user, for example. Advantageously, the observed component may be selected independently and after capture of the measurement data. As a result, an operator of the wind turbine generator is provided with a detailed picture, which indicates the levels of fatigue for each component which may be of interest. Advantageously, a maintenance schedule, a life expectancy or a remaining life expectancy may be determined for said component.

The device for fatigue monitoring, according to aspects of the description, is suitable for determination of a fatigue level prior to occurrence of initial damages. A level of fatigue of a certain observed component may be assessed without detection of any changes of the particular mechanic or dynamic properties of the component. A direct correlation between an exposure to loads and fatigue of the observed component may be provided.

The control unit may be configured to determine at least one vibration mode of the wind turbine generator structure. Furthermore, the control unit may be configured to determine a natural mode and an eigenfrequency of the wind turbine generator structure. According to an advantageous embodiment, the dynamic movement of the wind turbine generator structure is determined by the control unit based on a finite element model of the wind turbine generator structure. A set of master degrees of freedom may be determined so as to simplify the model and the calculations needed for the simulation of the dynamic movement of the wind turbine generator structure. This reduces the computational demand for performing the simulations.

According to another advantageous embodiment, the control unit is further configured to determine the load in the cross section of the observed component by multiplication of the value of the displacement with a stiffness matrix or by solving the equation of motion of the wind turbine generator structure.

The stiffness matrix and, in case of solving the equation of motion, a necessary mass and dampening matrix may be calculated or determined for a particular wind turbine generator structure, directly after assembly. Typically, this wind turbine generator structure will show any or negligible fatigue, normally the fatigue value will be defined to zero at the first start up of the fatigue observed structure. Furthermore, the device for fatigue monitoring may comprise a vibration sensor, in particular an acceleration sensor, as the sensor for determining the time dependent value of the displacement of the measurement point. The control unit may be configured to determine the time dependent value of the displacement by sensing or by capturing a time dependent value for the acceleration of the measurement point and subsequent integration over time.

Advantageously, the control unit comprises a fatigue model of the wind turbine generator structure. For example, the rainflow-counting algorithm and / or the algorithm of Palmgreen and Miner may be applied. A level of fatigue of the wind turbine generator structure may be determined by analysis of a set of loads, which is in turn determined from the time series of the load. Advantageously, a partial fatigue or a total fatigue of the wind turbine generator structure may be determined.

The device for fatigue monitoring is suitable for early determination of fatigue and prediction of damage or risk for failure of certain components of the wind turbine generator structure. An operator of the wind turbine generator is enabled to take measures against failure or deterioration of the wind turbine generator structure so as to prevent the wind turbine generator structure from serious damage. Down time of the wind turbine generator or complete failure thereof may be prevented.

According to still another aspect of the description, a method for fatigue monitoring of a wind turbine generator structure of a wind turbine generator is provided. At least one time dependent value of a displacement of at least one measurement point is determined. In particular, a plurality of time dependent values for a displacement of a variety of measurement points may be determined. The at least one measurement point is arranged on the wind turbine generator structure of the wind turbine generator. Advantageously, the measurement point may be arranged at a certain point of the wind turbine generator structure, which is determined based on an analysis of the vibration modes of the wind turbine generator structure. In particular, the measurement point is arranged to have a distance to the nodes of the oscillation. The measurement point may be located somewhere in the vicinity of a point showing maximum amplitude in one of the oscillation modes. Furthermore, a dynamic movement of the wind turbine generator structure may be determined based on the displacement of the measurement point. A load in a cross section of an observed component of the wind turbine generator structure may be determined based on data for the dynamic movement of the wind turbine generator structure. The observed component may be located at an arbitrary position of the wind turbine generator structure. In particular, there is no geometrically fixed correlation between the position of the observed component and the measurement point. A time series for the load in the cross section of the observed component may be determined. The time series of the load may be analyzed so as to assess a fatigue or a level of fatigue of the observed component.

According to an advantageous embodiment, at least one vibration mode, in particular a natural mode and an eigenfrequency of the wind turbine generator structure, is / are determined. The dynamic movement of the wind turbine generator structure may be determined based on a finite element model of the wind turbine generator structure. Advantageously, the finite element model may be reduced and simplified by determination of a set of master degrees of freedom. Furthermore, the load in the cross section of the observed component may be determined by multiplication of the value for the displacement with a stiffness matrix or by solving the equation of motion of the wind turbine generator structure. An initial stiffness of the wind turbine generator structure may be assumed, which means the stiffness matrix is determined or calculated for a wind turbine generator structure having very low or any fatigue.

According to another embodiment, a time dependent acceleration of the measurement point is determined and the time dependent value for the displacement of the measurement point is determined by integration of the value for the acceleration over time. A fatigue or a level of fatigue of the observed component may be determined by determining a set of inner loads from the time series of the load and by inputting this inner load history into a fatigue model of the wind turbine generator structure. For example, algorithms like the rainflow-counting algorithm and / or the algorithm of Palmgreen and Miner may be applied as models for fatigue determination. Advantageously, a partial fatigue or a total fatigue of the wind turbine generator structure of the wind turbine generator may be determined.

Same or similar advantages which have been already mentioned with respect to the device for fatigue monitoring apply to the method for fatigue monitoring in a same or similar way and are therefore not repeated.

According to another advantageous aspect of the description, a system for managing a fatigue life distribution of an individual or a plurality of wind turbine generators is provided. A wind turbine generator structure of each wind turbine generator of the plurality of wind turbine generators is provided with a device for fatigue monitoring. The devices for fatigue monitoring may be configured according to aspects of the description. The system for managing a fatigue life distribution further comprises a fatigue life management unit, which is configured to capture fatigue data for each wind turbine generator. Furthermore, the fatigue life management unit may be configured to display the different levels of fatigue of the plurality of wind turbine generators. Advantageously, each wind turbine generator of a wind farm may be provided with a device for fatigue monitoring. The system for managing the fatigue life distribution may display certain operational parameters of the wind turbine generators together with an individual level of fatigue. The operator of the wind farm is enabled to average the fatigue levels of the individual wind turbine generators of the wind farm, for example by shutting down wind turbine generators having a high level of fatigue under certain weather conditions. By averaging the fatigue level of the wind turbine generators, the overall life expectancy of the wind farm may be optimized. Furthermore, maintenance and service planning for the wind farm may be optimized.

According to an advantageous embodiment of the description, the fatigue life management unit is configured to determine a first level of fatigue of a first wind turbine generator and a second level of fatigue of a second wind turbine generator. The first level of fatigue and the second level of fatigue are compared and based on said information, operation of the first and second wind turbine generator is optimized. Advantageously, the fatigue life management unit is configured to set the wind turbine generator having a higher level of fatigue to a mode of operation which exposes its wind turbine generator structure to a lower stress level than the wind turbine generator structure of the wind turbine generator having the lower level of fatigue and vice versa. For example, a pitch angle of the rotor blades may be increased, so as to reduce the thrust forces on the rotor.

Nowadays, wind energy farms are designed for approx. 20 to 25 years of operating time. Advantageously, the system for managing the fatigue life distribution is expected to lengthen the operating time of a wind farm by approximately 10 additional years. Significant cost savings may be expected.

According to another advantageous aspect of the description, a method of operating an individual or of a plurality of wind turbine generators is provided. A wind turbine generator structure of each wind turbine generator of the plurality of wind turbine generators is provided with a device for fatigue monitoring. The device for fatigue monitoring may be configured according to aspects of the description. Fatigue data is captured for each wind turbine generator and optionally, the different fatigue levels of the plurality of wind turbine generators are displayed. A first level of fatigue of a first wind turbine generator is determined and a second level of fatigue of a second wind turbine generator is determined. The first level of fatigue is compared with the second level of fatigue. The wind turbine generator having a higher level of fatigue is set to a mode of operation which exposes its wind turbine generator structure to a lower stress level than the wind turbine generator structure of the wind generating having the lower level of fatigue. A same setting may be applied vice versa which means, the wind turbine generator having the lower level of fatigue is set to a mode of operation which exposes its wind turbine generator structure to a higher stress level than the wind turbine generator structure of the wind generating having the higher level of fatigue.

Same or similar advantages which have been already mentioned with respect to the system of managing the fatigue life distribution apply to the method of operating an individual or of a plurality of wind turbine generators in a same or similar way and are therefore not repeated.

In another aspect of the description, a wind turbine generator is provided. It has a wind turbine generator structure, which is provided with a device for fatigue monitoring according to aspects of the description.

According to another aspect of the description, a maintenance scheduling or life expectancy management system for a wind generator having wind turbine generator structure is provided. The system comprises a device for fatigue monitoring according to aspects of the description. Said device is arranged on the wind turbine generator structure. The system is configured to schedule a maintenance service or to determine a life expectancy of at least the observed component, based on the assessed fatigue of the observed component.

### BRIEF DESCRIPTION OF DRAWINGS

Further aspects and characteristics of the invention ensue from the following description of preferred embodiments of the invention with reference to the accompanying drawings, wherein
FIG. 1 is a simplified schematic diagram showing a wind farm, which is supplied with a system for managing a fatigue life distribution, according to an embodiment of the invention, the wind turbine generators are supplied with a device for fatigue monitoring of a wind turbine generator structure of the wind turbine generator,
FIGs. 2A to 2C illustrate vibration modes of a wind turbine generator structure of a wind turbine generator,
FIG. 3 illustrates a vibration mode of a wind turbine generator structure of a wind turbine generator (FIG. 3A) and shows corresponding accelerations at different measurement points (FIGs. 3B to 3D),
FIG. 4 illustrates a vibration mode of a wind turbine generator structure of wind turbine generator (FIG. 4A) and shows a corresponding acceleration (FIG. 4B) and displacement (FIG. 4C) of a measurement point,
FIG. 5 illustrates a vibration mode of a wind turbine generator structure of a wind turbine generator (FIG. 5A) and shows a corresponding bending moment (FIG. 5B) and a strain in a cross section of an observed component (FIG. 5C) and
FIG. 6 is a flowchart illustrating a method for fatigue monitoring of a wind turbine generator structure of a wind turbine generator.

### DETAILED DESCRIPTION OF EXAMPLE EMBODIMENTS

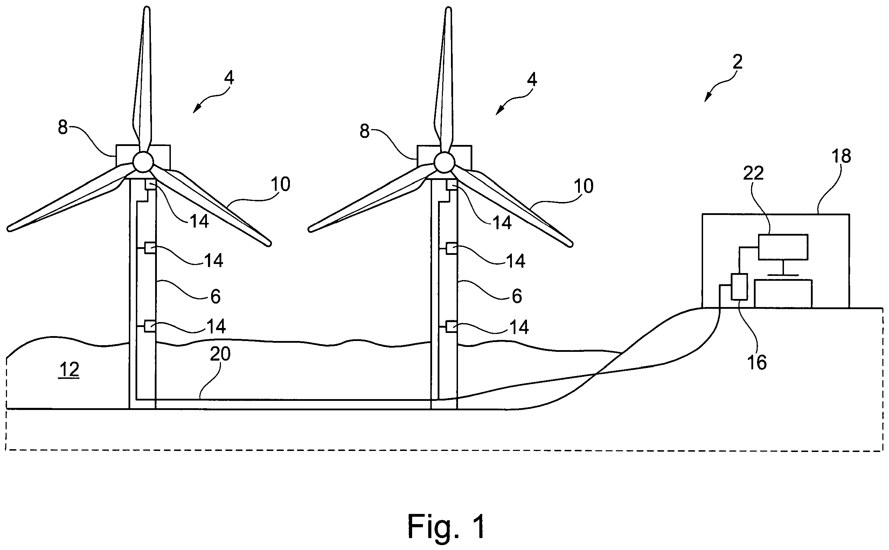

FIG. 1 shows a simplified wind farm 2 comprising a plurality of wind turbine generators 4. Each wind turbine generator 4 has a wind turbine generator structure 6. By way of an example, the wind turbine generator structure 6 is the tower, for example a steel tower which is manufactured from pre-welded elements, of the wind turbine generator 4. Furthermore, the wind turbine generator 4 comprises a nacelle 8, which is mounted on top of the wind turbine generator structure 6. In the nacelle 8, there is a generator and further commonly known components of a wind turbine generator 4. A driving shaft of the generator is coupled to a rotor hub which carries the rotor blades 10.

By way of an example only, the wind farm 2 is an offshore wind farm 2. The wind turbine generator structure 6 is founded or connected to the sea bed and soiled in the sea 12. Furthermore, the wind turbine generators 4 are provided with a device for fatigue monitoring. The device comprises an individual or a plurality of sensors 14, which are for measuring a displacement of the wind turbine generator structure 6 and which are mounted on the wind turbine generator structure 6. For example, the sensors 14 are acceleration sensors. Advantageously, acceleration sensors are comparatively inexpensive, simple and robust. The acceleration sensors may be configured to measure accelerations in three dimensions, in particular in three dimensions, which are orthogonal to each other. The sensors 14 are configured to acquire a time dependent value of a displacement of a measurement point, which is the point of the wind turbine generator structure 6 at which the sensor 14 is mounted. If the sensor 14 is an acceleration sensor, a time dependent value for the acceleration of the respective measurement point is determined and a displacement is calculated by subsequent integration over time.

The device for fatigue monitoring further comprises a control unit 16, which may be a work station, a computer, a microcontroller or any other suitable device. According to the embodiment in FIG. 1, the control unit 16 is located in a control station 18. The control station 18 may be located in one of the wind turbine generators 4 or in may be a sea- or land-based station. The control unit 16 and the sensors 14 are coupled via a suitable communication line 20 which may be a fiber-optic cable, a coaxial cable, a conventional cable or any other data link, which is suitable for data transfer from the sensors 14 to the control unit 16. For example, a wireless data transfer between the sensors 14 and the control unit 16 may be established. In particular, the wind turbine generators 4 may be provided with a data hub (not shown), which acquires the measurement values from the sensors 14, for example using a wired link. The data hub subsequently transfers the measurement data via a network, which may be a wired or a wireless network (e.g. WLAN) to the control unit 16. The control unit 16 may be further coupled to a display 22, which may be a part of the control station 18 for surveillance and control of the wind farm 2.

The control unit 16 is configured to determine a load in a cross section of an observed component of the wind turbine generator structure 6. In principle, the observed component may be any part or component of the wind turbine generator structure 6. For example, the observed component is a welded seam near the foot of the wind turbine generator structure 6. Furthermore, the observed component may be a tower segment, in particular a tower segment which is for reducing a diameter of the tower, or a tower segment which is arranged adjacent to the nacelle 8. The load in a cross section of this observed component is determined based on data for the dynamic movement of the wind turbine generator structure 6. Naturally, an individual or a plurality of loads in an individual or a plurality of cross sections of an individual or a plurality of observed components may be determined, based on data for the dynamic movement of the wind turbine generator structure 6. A time series for the load in the cross section of the observed component is determined. Said time series is analyzed by the control unit 16 so as to assess a fatigue or a level of fatigue of the observed component(s).

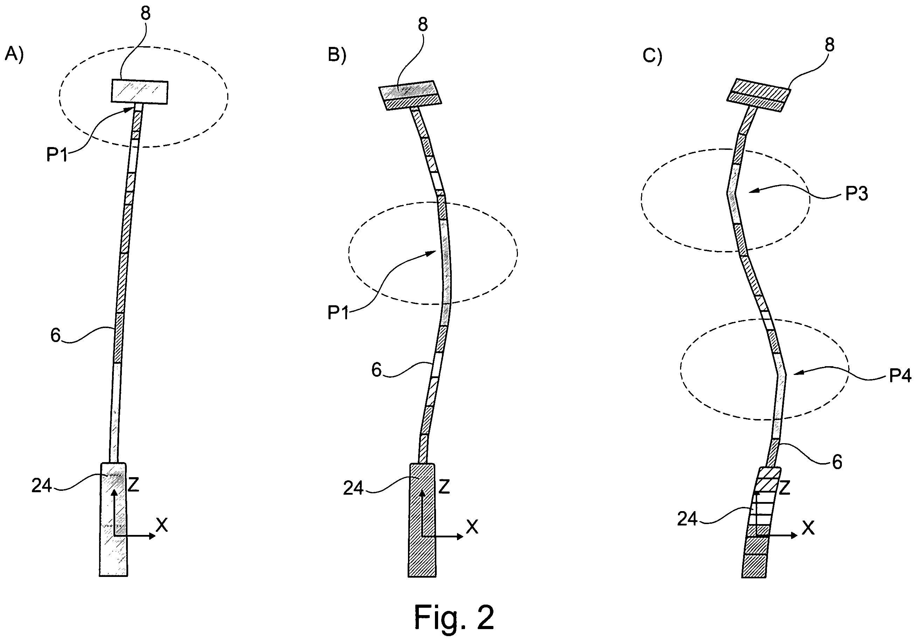

Operation of the control unit 16 according to embodiments of the invention will be explained in more detail by making reference to FIGs. 2 to 5.

In FIG. 2, there is a simplified diagram showing three vibration modes, in particular the first three natural modes of the wind turbine generator structure 6 of the wind turbine generator 4. According to the mentioned example, the wind turbine generator structure 6 may be the tower of the wind turbine generator 4. For simplification of the drawings, the wind turbine generator structure 6 is a straight tower carrying a nacelle 8 on top. Further components of the wind turbine generator 4, such as the rotor hub and the rotor blades, are not depicted due to simplification of the drawings only. The wind turbine generator structure 6 is simulated based on a finite element model. In FIG. 2A, the wind turbine generator structure 6 oscillates according to a vibration mode, which is the 0^{th}-order natural mode. The nacelle 8 shows maximum amplitude while the node of the oscillation is located near a foot 24 of the wind turbine generator structure 6. In FIG. 2B the wind turbine generator structure 6 oscillates according to a second vibration mode, which is the 1^{st}-order natural mode. The nacelle 8 performs a tilting action and maximum amplitude for the displacement may be found in a center of the wind turbine generator structure 6, which is approximately in the middle between the foot 24 and the nacelle 8. In FIG. 2C, there is an illustration of a third vibration mode, which is the 2^{nd}-order natural mode of the wind turbine generator structure 6. There is a node near the center of the wind turbine generator structure 6. Higher amplitudes may be found in sections of the wind turbine generator structure 6, which are above and below.

The simulation in FIGs. 2A to 2C may be applied for determination of the master degrees of freedom of the wind turbine generator structure 6. In particular, the natural modes and the eigenfrequency may be determined. Meaningful positions for the measurement points may be determined based on this analysis. For example, there may be a first measurement point P1 near the nacelle 8, a second measurement point P2 near the center of the wind turbine generator structure 6. A third measurement point P3 and a fourth measurement point P4 may be arranged between the center and the nacelle 8 and the center and the foot 24, respectively. Advantageously, the measurement points P1..P4 are arranged at positions of the wind turbine generator structure 6 showing maximum amplitude in one of the natural modes.

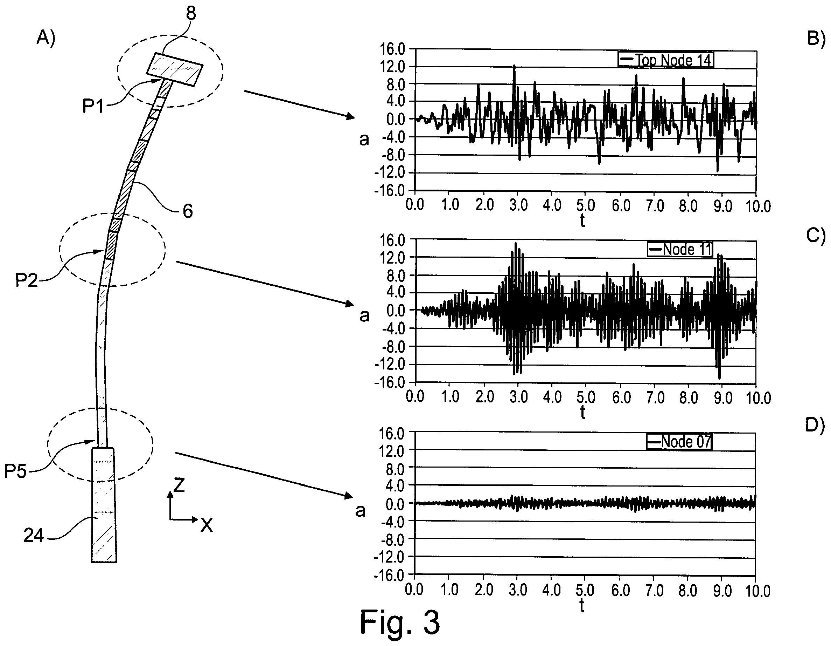

In FIG. 3A, there is a simplified diagram of the wind turbine generator structure 6 oscillating according to a 0^{th}-order natural mode. The wind turbine generator structure 6 is provided with three sensors (not shown) at measurement points P1 and P2 and at measurement point P5 near the foot 24 of the wind turbine generator structure 6. In FIG. 3B to 3D, there is a time dependent acceleration A, which is acquired at measurement point P1 (FIG. 3B), at measurement point P2 (FIG. 3C) and at measurement point P5 (FIG. 3D). As expected, the amplitude of the acceleration A at measurement point P1 and P2 is higher than the acceleration A at measurement point P5.

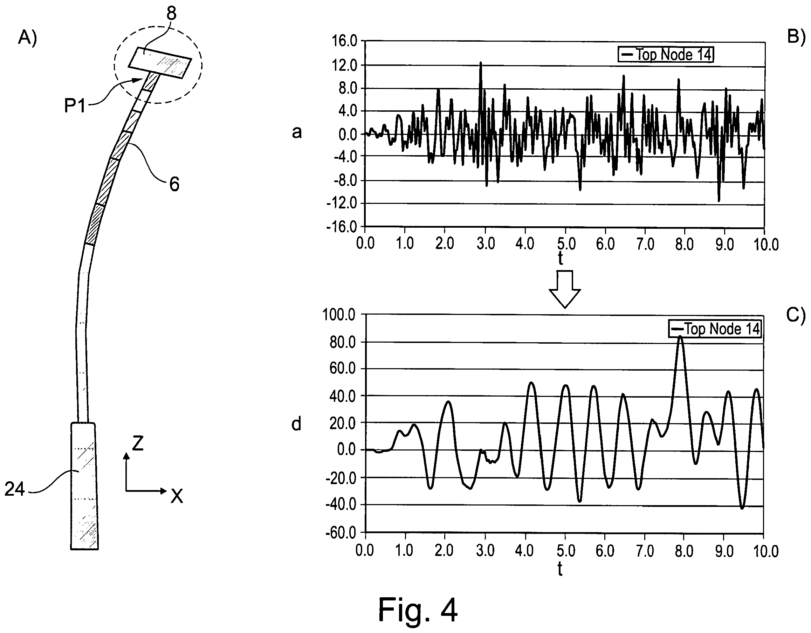

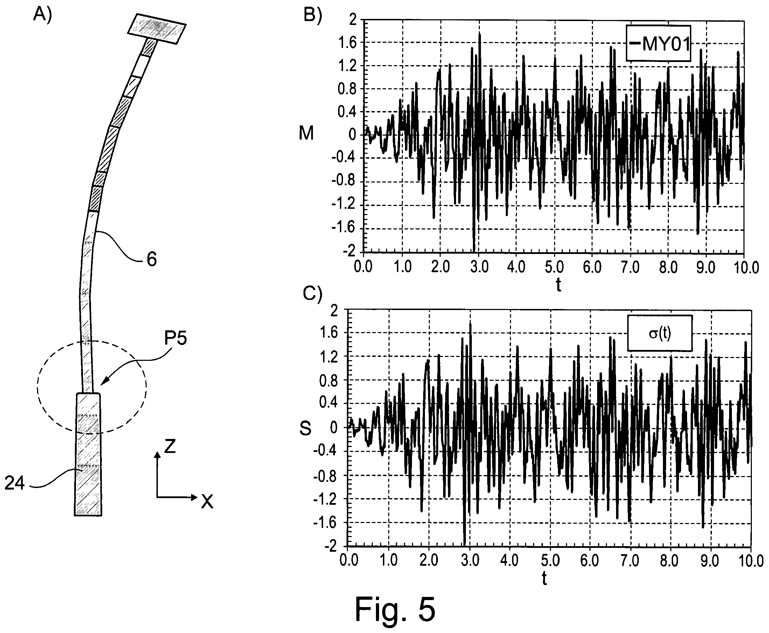

In FIG. 4A there is the wind turbine generator structure 6, which is known from FIG. 3A. The time dependent acceleration A in FIG. 4B corresponds to the time dependent acceleration in FIG. 3B. By integrating the time dependent value for the acceleration A over time, a time dependent displacement D may be determined. The displacement D is depicted in FIG. 4C. In particular, this may be performed for each measurement point P1..P5. However, for determination of fatigue, a load in a cross section of an observed component is needed. By way of an example only, the observed component is a welded seam at the foot of the wind turbine generator structure 6 near measurement point P5. Starting from the values for the displacement D, which are determined for an individual or a plurality of measurement points P1..P5, a movement of the wind turbine generator structure 6 may be determined based on the finite element model. An arbitrary part or section of the wind turbine generator structure in said finite element model may be selected so as to determine a bending moment in a cross section of said observed component. By way of an example only, the welded seam at the foot 24 is selected. A bending moment M is depicted in FIG. 5B as a time dependent value. Determination of the load in the cross section of the observed component may be performed by multiplication of the value for the displacement D with a stiffness matrix or by solving the equation of motion for the wind turbine generator structure 6. In particular, this stiffness matrix may be an initial stiffness matrix, which reflects the mechanical properties of a wind turbine generator structure 6 without fatigue. This initial stiffness matrix may be determined by theoretical calculations or by suitable test and analysis of measurement values.

In FIG. 5C, there is a time dependent value for the strain S, which may be determined by scaling a previously calculated response of the observed component on a particular unity load. The unity load response may be stored and a sum vector for the tension or strain S may be calculated by superposition. FIG. 5C shows a time series for the load or strain S in a cross-section of the observed component. This time series represents fatigue data. The time series may be analyzed using commonly known methods for analysis of fatigue data, for example, the rainflow-counting algorithm or the algorithm of Palmgreen and Miner.

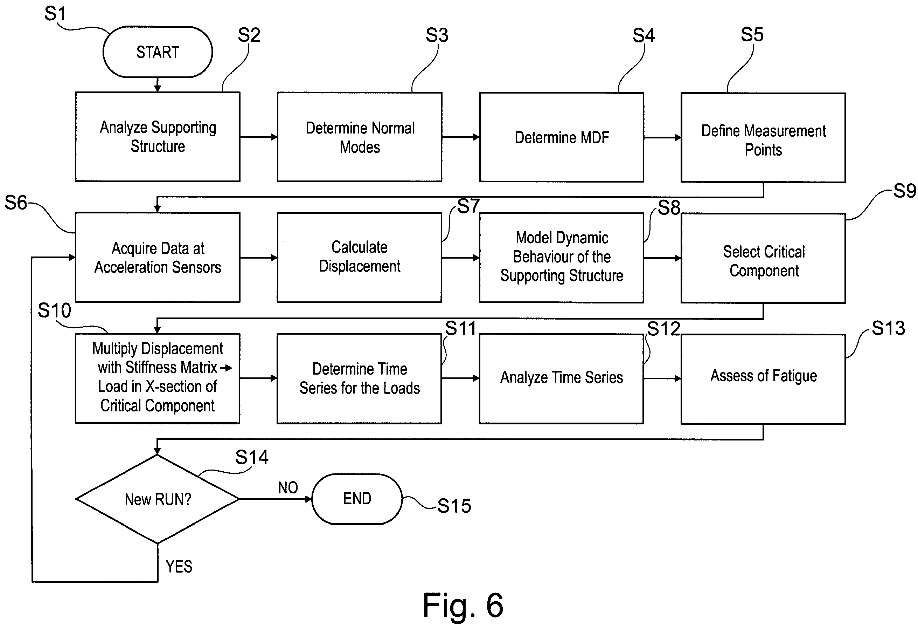

In FIG. 6, there is a flowchart showing process steps of a method for fatigue monitoring of a wind turbine generator structure 6 of a wind turbine generator 4, according to an embodiment of the invention. The method starts (S1) and the wind turbine generator structure 6 is analyzed (S2) so as to determine (S3) the normal modes of oscillation. Furthermore, the master degrees of freedom (MDF) may be determined (S4). Subsequently, an arrangement of measurement points P1..P5 is defined (S5). Measurement data, in particular acceleration data, is sensed at acceleration sensors (S6). Based on the time dependent values for the acceleration, a displacement is calculated (S7). A dynamic behavior, i.e. a movement of the wind turbine generator structure 6, is determined (S8) based on a finite element model. An observed component of the wind turbine generator structure 6 is selected for analysis (S9) and subsequently, a displacement is multiplied with a stiffness matrix or by solving the equation of motion so as to determine (S10) a load in a cross section of the observed component. A time series for the loads is determined (S11) and based on said time series, an analysis is performed (S12) so as to assess (S13) a fatigue of the observed component.

Data acquisition and determination of fatigue may be performed continuously. However, in order to reduce measurement data, assessment of fatigue may be performed in certain intervals or frequently, for example hourly, once a day or triggered. Measurements may be triggered for example by certain whether conditions. In selection step (S14) it is determined whether or not a new run is started or the fatigue monitoring is finished (S15).

The device and method for fatigue monitoring is particularly advantageous for management of a fatigue life distribution in a wind farm 2 (see FIG. 1). For example, an individual or a plurality of wind turbine generators 4 may be provided with a device for a fatigue monitoring. In other words, a level of fatigue is determined for the wind turbine generator structures 6 of each wind turbine generator 4 in a wind farm 2.

The control unit 16 may be provided with further functionality so as to provide a fatigue management unit, which is configured to capture fatigue data for each wind turbine generator 4 and to display the different levels of fatigue of the plurality of wind turbine generators 4, for example on a display 22. An operator in the control station 18, for example under certain whether conditions, may select certain wind turbine generators 4 to power-down or to reduce their rotational speed, in order to reduce a level of stress in their wind turbine generator structures 6. Consequently, the remaining wind turbine generators 4 will be exposed to a higher stress level than the wind turbine generators 4 which are powered down. If said remaining wind turbine generators 4 have a lower level of fatigue, the fatigue levels of the wind turbine generators 4 in a wind farm 2 may be averaged.

Advantageously, the fatigue management unit is configured to determine a first level of fatigue of a first wind turbine generator 4 and a second level of fatigue of a second wind turbine generator 4. The first level and the second level of fatigue are compared and the wind turbine generator 4 having a higher level of fatigue is set to a mode of operation, which exposes its wind turbine generator structure 6 to a lower level of stress than the wind turbine generator structure 6 of the wind turbine generator 4 having the lower level of fatigue. This may be performed for example by a change of the pitch angle and subsequent reduction of rotational speed of the driving shaft. Vice versa, a wind turbine generator 4 having a lower level of fatigue is set to a mode of operation, which exposes its wind turbine generator structure 6 to a higher stress level, and a wind turbine generator 4 having a higher level of fatigue is set to a mode of operation, which exposes its wind turbine generator structures 6 to a lower level of stress. Advantageously, the fatigue management unit may be suitable for autonomous operation and distribution of fatigue levels of the wind turbine generators 4 in a wind farm 2.

## Claims

1. A system for managing a fatigue distribution of a plurality of wind turbine generators (4), the system comprising:
a plurality of wind turbine generators (4), each of the wind turbine generators (4) having a wind turbine generator structure (6),
a plurality of devices for fatigue monitoring of a wind turbine generator structure (6) of a wind turbine generator (4),
wherein a wind turbine generator structure (6) of each wind turbine generator (4) is provided with a device for fatigue monitoring of a wind turbine generator structure (6) of a wind turbine generator (4), wherein each of the devices comprises:
at least one sensor (14) for determining at least one time dependent value of a displacement of a measurement point, which is arranged on the wind turbine generator structure (6),
wherein the device further comprises a control unit (16), which is configured to determine a dynamic movement of the wind turbine generator structure (6),
wherein the at least one time dependent value for the displacement of the at least one sensor (14) is input data for determination of the particular dynamic movement,
wherein the control unit (16) is further configured to:
(a) determine a load in a cross section of an observed component of the wind turbine generator structure (6), based on data for the dynamic movement of the wind turbine generator structure (6), wherein the observed component is located at an arbitrary position in the wind turbine generator structure (6), which is independent of the at least one measurement point,
(b) determine a time series for the load in the cross section of the observed component,
(c) analyze a stress time series, which is based on the time series of the load so as to assess a level of fatigue of the observed component independent of any changes of particular mechanic or dynamic properties of the observed component,
the system further comprising a fatigue management unit which is configured to:
a) determine a first level of fatigue of a first wind turbine generator (4) and a second level of fatigue of a second wind turbine generator (4), the first and second level of fatigue being based on the assessed level of fatigue of an observed component of the respective wind turbine generator (4) determined as defined above by the control unit (16) of the respective wind turbine generator (4),
b) compare the first level of fatigue and the second level of fatigue,
c) set the wind turbine generator (4) having a higher level of fatigue to a mode of operation which exposes its wind turbine generator structure (6) to a lower stress level than the wind turbine generator structure (6) of the wind turbine generator (4) having the lower level of fatigue and vice versa,
wherein the level of fatigue of the observed component or the wind turbine generator (4) is a total fatigue usage factor of said observed component or said wind turbine generator (4), said total fatigue usage factor depending on the variable loads over time on said observed component or said wind turbine generator (4) and a structural response on themselves, wherein any total fatigue usage factor of an observed component or wind turbine generator (4) is an accumulation of all partial fatigue usage factors of said observed component or said wind turbine generator (4), wherein partial fatigue usage factors are calculated by the relation between the actual numbers of occurrences during a fraction of time divided by the allowed number of occurrences defined in a Wöhler curve.

2. A method of operating a plurality of wind turbine generators (4) including a first wind turbine generator (4) and a second wind turbine generator (4), wherein a wind turbine generator structure (6) of each wind turbine generator (4) of the plurality of wind turbine generators (4) is provided with a device for fatigue monitoring of a wind turbine generator structure (6) of a wind turbine generator (4), wherein each of the devices comprises:
at least one sensor (14) for determining at least one time dependent value of a displacement of a measurement point, which is arranged on the wind turbine generator structure (6),
wherein the device further comprises a control unit (16), which is configured to determine a dynamic movement of the wind turbine generator structure (6), wherein the at least one time dependent value for the displacement of the at least one sensor (14) is input data for determination of the particular dynamic movement,
wherein
the control unit (16) is further configured to:
(a) determine a load in a cross section of an observed component of the wind turbine generator structure (6), based on data for the dynamic movement of the wind turbine generator structure (6), wherein the observed component is located at an arbitrary position in the wind turbine generator structure (6), which is independent of the at least one measurement point,
(b) determine a time series for the load in the cross section of the observed component,
(c) analyze a stress time series, which is based on the time series of the load so as to assess a level of fatigue of the observed component independent of any changes of particular mechanic or dynamic properties of the observed component,
the method comprising the steps of:
a) determining a first level of fatigue of the first wind turbine generator (4) and a second level of fatigue of the second wind turbine generator (4), the first and second level of fatigue being based on the assessed level of fatigue of an observed component of the respective wind turbine generator (4) determined by the control unit (16) of the respective wind turbine generator (4) by carrying out the steps (a) to (c) as defined above,
b) comparing the first level of fatigue and the second level of fatigue,
c) setting the wind turbine generator (4) having a higher level of fatigue to a mode of operation which exposes its wind turbine generator structure (6) to a lower stress level than the wind turbine generator (6) structure of the wind turbine generator (4) having the lower level of fatigue and vice versa,
wherein the level of fatigue of the observed component or the wind turbine generator (4) is a total fatigue usage factor of said observed component or said wind turbine generator (4), said total fatigue usage factor depending on the variable loads over time on said observed component or said wind turbine generator (4) and a structural response on themselves, wherein any total fatigue usage factor of an observed component or wind turbine generator (4) is an accumulation of all partial fatigue usage factors of said observed component or said wind turbine generator (4), wherein partial fatigue usage factors are calculated by the relation between the actual numbers of occurrences during a fraction of time divided by the allowed number of occurrences defined in a Wöhler curve.

3. The system of claim 1, wherein the control unit is further configured to:
(d) schedule a maintenance service and/or determine a life expectancy and/or determine a remaining life expectancy of the observed component, based on the assessed level of fatigue of the observed component.

## Patentansprüche

1. System zum Verwalten einer Ermüdungsverteilung bei mehreren Windturbinengeneratoren (4), das Folgendes umfasst:
mehrere Windturbinengeneratoren (4), von denen jeder eine Windturbinengeneratorkonstruktion (6) aufweist,
mehrere Einrichtungen zum Überwachen einer Windturbinengeneratorkonstruktion (6) eines Windturbinengenerators (4) auf Ermüdung,
wobei eine Windturbinengeneratorkonstruktion (6) jedes Windturbinengenerators (4) mit einer Einrichtung zum Überwachen einer Windturbinengeneratorkonstruktion (6) eines Windturbinengenerators (4) auf Ermüdung versehen ist, wobei jede der Einrichtungen Folgendes umfasst:
mindestens einen Sensor (14) zum Bestimmen mindestens eines zeitabhängigen Werts für eine Verlagerung eines Messpunkts, der an der Windturbinengeneratorkonstruktion (6) angeordnet ist,
wobei die Einrichtung ferner eine Steuereinheit (16) umfasst, die so konfiguriert ist, dass sie eine dynamische Bewegung der Windturbinengeneratorkonstruktion (6) bestimmt,
wobei es sich bei dem mindestens einen zeitabhängigen Wert für die Verlagerung des mindestens einen Sensors (14) um Eingabedaten zum Bestimmen der spezifischen dynamischen Bewegung handelt,
wobei die Steuereinheit (16) ferner so konfiguriert ist, dass sie:
(a) auf der Grundlage von Daten zur dynamischen Bewegung der Windturbinengeneratorkonstruktion (6) eine Last in einem Querschnitt einer beobachteten Komponente der Windturbinengeneratorkonstruktion (6) bestimmt, wobei sich die beobachtete Komponente an einer beliebigen Position in der Windturbinengeneratorkonstruktion (6) befindet, die von dem mindestens einen Messpunkt unabhängig ist,
(b) eine Zeitreihe für die Last in dem Querschnitt der beobachteten Komponente bestimmt,
(c) eine Belastungszeitreihe analysiert, die auf der Zeitreihe der Last basiert, um unabhängig von Änderungen bestimmter mechanischer oder dynamischer Eigenschaften der beobachteten Komponente einen Ermüdungsgrad der beobachteten Komponente einzuschätzen,
wobei das System ferner eine Einheit zum ermüdungsbezogenen Steuern umfasst, die so konfiguriert ist, dass sie:
a) einen ersten Ermüdungsgrad eines ersten Windturbinengenerators (4) und einen zweiten Ermüdungsgrad eines zweiten Windturbinengenerators (4) bestimmt, wobei der erste und der zweite Ermüdungsgrad auf dem eingeschätzten Ermüdungsgrad einer beobachteten Komponente des jeweiligen Windturbinengenerators (4) basieren, der wie oben definiert von der Steuereinheit (16) des jeweiligen Windturbinengenerators (4) bestimmt wird,
b) den ersten und den zweiten Ermüdungsgrad vergleicht,
c) den Windturbinengenerator (4) mit einem höheren Ermüdungsgrad in einen Betriebsmodus versetzt, in dem dessen Windturbinengeneratorkonstruktion (6) einem geringeren Belastungsgrad ausgesetzt ist als die Windturbinengeneratorkonstruktion (6) des Windturbinengenerators (4) mit dem geringeren Ermüdungsgrad und umgekehrt,
wobei es sich bei dem Ermüdungsgrad der beobachteten Komponente oder des Windturbinengenerators (4) um einen Gesamtermüdungsausnutzungsfaktor der beobachteten Komponente oder des Windturbinengenerators (4) handelt, wobei der Gesamtermüdungsausnutzungsfaktor von den über die Zeit schwankenden Lasten an der beobachteten Komponente oder dem Windturbinengenerator (4) und einer baulichen Reaktion darauf abhängig ist, wobei es sich bei jedem Gesamtermüdungsausnutzungsfaktor einer beobachteten Komponente oder eines Windturbinengenerators (4) um eine Kumulation aller Teilermüdungsausnutzungsfaktoren der beobachteten Komponente oder des Windturbinengenerators (4) handelt,
wobei Teilermüdungsausnutzungsfaktoren durch die Beziehung zwischen der tatsächlichen Anzahl Vorkommnisse in einem Zeitabschnitt geteilt durch die zulässige Anzahl Vorkommnisse laut Definition in einer Wöhler-Kurve berechnet werden.

2. Verfahren zum Betreiben mehrerer Windturbinengeneratoren (4) einschließlich eines ersten Windturbinengenerators (4) und eines zweiten Windturbinengenerators (4), wobei eine Windturbinengeneratorkonstruktion (6) jedes Windturbinengenerators (4) der mehreren Windturbinengeneratoren (4) mit einer Einrichtung für die Überwachung einer Windturbinengeneratorkonstruktion (6) eines Windturbinengenerators (4) auf Ermüdung versehen ist, wobei jede der Einrichtungen Folgendes umfasst:
mindestens einen Sensor (14) zum Bestimmen mindestens eines zeitabhängigen Werts einer Verlagerung eines Messpunkts, der an der Windturbinengeneratorkonstruktion (6) angeordnet ist,
wobei die Einrichtung ferner eine Steuereinheit (16) umfasst, die so konfiguriert ist, dass sie eine dynamische Bewegung der Windturbinengeneratorkonstruktion (6) bestimmt, wobei es sich bei dem mindestens einen zeitabhängigen Wert für die Verlagerung des mindestens einen Sensors (14) um Eingabedaten zum Bestimmen der spezifischen dynamischen Bewegung handelt,
wobei die Steuereinheit (16) ferner so konfiguriert ist, dass sie:
(a) auf der Grundlage von Daten zur dynamischen Bewegung der Windturbinengeneratorkonstruktion (6) eine Last in einem Querschnitt einer beobachteten Komponente der Windturbinengeneratorkonstruktion (6) bestimmt, wobei sich die beobachtete Komponente an einer beliebigen Position in der Windturbinengeneratorkonstruktion (6) befindet, die von dem mindestens einen Messpunkt unabhängig ist,
(b) eine Zeitreihe für die Last in dem Querschnitt der beobachteten Komponente bestimmt,
(c) eine Belastungszeitreihe analysiert, die auf der Zeitreihe der Last basiert, um unabhängig von Änderungen bestimmter mechanischer oder dynamischer Eigenschaften der beobachteten Komponente einen Ermüdungsgrad der beobachteten Komponente einzuschätzen,
wobei das Verfahren folgende Schritte umfasst:
a) Bestimmen eines ersten Ermüdungsgrads des ersten Windturbinengenerators (4) und eines zweiten Ermüdungsgrads des zweiten Windturbinengenerators (4), wobei der erste und der zweite Ermüdungsgrad auf dem eingeschätzten Ermüdungsgrad einer beobachteten Komponente des jeweiligen Windturbinengenerators (4) basieren, der von der Steuereinheit (16) des jeweiligen Windturbinengenerators (4) bestimmt wird, durch Durchführen der oben definierten Schritte (a) bis (c),
b) Vergleichen des ersten und des zweiten Ermüdungsgrads,
c) Versetzen des Windturbinengenerators (4) mit einem höheren Ermüdungsgrad in einen Betriebsmodus, in dem dessen Windturbinengeneratorkonstruktion (6) einem geringeren Belastungsgrad ausgesetzt ist als die Windturbinengeneratorkonstruktion (6) des Windturbinengenerators (4) mit dem geringeren Ermüdungsgrad und umgekehrt,
wobei es sich bei dem Ermüdungsgrad der beobachteten Komponente oder des Windturbinengenerators (4) um einen Gesamtermüdungsausnutzungsfaktor der beobachteten Komponente oder des Windturbinengenerators (4) handelt, wobei der Gesamtermüdungsausnutzungsfaktor von den über die Zeit schwankenden Lasten an der beobachteten Komponente oder dem Windturbinengenerator (4) und einer baulichen Reaktion darauf abhängig ist, wobei es sich bei jedem Gesamtermüdungsausnutzungsfaktor einer beobachteten Komponente oder eines Windturbinengenerators (4) um eine Kumulation aller Teilermüdungsausnutzungsfaktoren der beobachteten Komponente oder des Windturbinengenerators (4) handelt,
wobei Teilermüdungsausnutzungsfaktoren durch die Beziehung zwischen der tatsächlichen Anzahl Vorkommnisse in einem Zeitabschnitt geteilt durch die zulässige Anzahl Vorkommnisse laut Definition in einer Wöhler-Kurve berechnet werden.

3. System nach Anspruch 1, bei dem die Steuereinheit ferner so konfiguriert ist, dass sie:
(d) auf der Grundlage des eingeschätzten Ermüdungsgrads der beobachteten Komponente eine Wartung anberaumt und/oder eine Lebensdauer bestimmt und/oder eine verbleibende Lebensdauer der beobachteten Komponente bestimmt.

## Revendications

1. Système de gestion d'une répartition de fatigue d'une pluralité de générateurs d'éolienne (4), le système comprenant :
une pluralité de générateurs d'éolienne (4), chacun des générateurs d'éolienne (4) ayant une structure de générateur d'éolienne (6),
une pluralité de dispositifs de surveillance de fatigue d'une structure de générateur d'éolienne (6) d'un générateur d'éolienne (4),
dans lequel une structure de générateur d'éolienne (6) de chaque générateur d'éolienne (4) est pourvue d'un dispositif de surveillance de fatigue d'une structure de générateur d'éolienne (6) d'un générateur d'éolienne (4), dans lequel chacun des dispositifs comprend :
au moins un capteur (14) pour la détermination d'au moins une valeur fonction du temps d'un déplacement d'un point de mesure, qui est disposé sur la structure de générateur d'éolienne (6),
dans lequel le dispositif comprend en outre une unité de commande (16), qui est configurée pour déterminer un mouvement dynamique de la structure de générateur d'éolienne (6),
dans lequel la au moins une valeur fonction du temps pour le déplacement du au moins un capteur (14) est une donnée d'entrée pour une détermination du mouvement dynamique particulier,
dans lequel l'unité de commande (16) est configurée en outre pour :
(a) déterminer une charge dans une coupe transversale d'un composant observé de la structure de générateur d'éolienne (6), sur la base de données pour le mouvement dynamique de la structure de générateur d'éolienne (6), dans lequel le composant observé est situé à une position arbitraire dans la structure de générateur d'éolienne (6), qui est indépendante du au moins un point de mesure,
(b) déterminer une série temporelle pour la charge dans la coupe transversale du composant observé,
(c) analyser une série temporelle de contrainte, qui est basée sur la série temporelle de la charge afin d'évaluer un niveau de fatigue du composant observé indépendant de n'importe quels changements de propriétés particulières mécaniques ou dynamiques du composant observé,
le système comprenant en outre une unité de gestion de fatigue qui est configurée pour :
a) déterminer un premier niveau de fatigue d'un premier générateur d'éolienne (4) et un second niveau de fatigue d'un second générateur d'éolienne (4), le premier et le second niveau de fatigue étant basés sur le niveau évalué de fatigue d'un composant observé du générateur d'éolienne (4) respectif déterminé tel que défini ci-dessus par l'unité de commande (16) du générateur d'éolienne (4) respectif,
b) comparer le premier niveau de fatigue et le second niveau de fatigue,
c) régler le générateur d'éolienne (4) ayant un plus haut niveau de fatigue à un mode de fonctionnement qui expose sa structure de générateur d'éolienne (6) à un niveau de contrainte plus faible que la structure de générateur d'éolienne (6) du générateur d'éolienne (4) ayant le niveau le plus faible de fatigue et vice versa,
dans lequel le niveau de fatigue du composant observé ou du générateur d'éolienne (4) est un facteur d'utilisation de fatigue totale dudit composant observé ou ledit générateur d'éolienne (4), ledit facteur d'utilisation de fatigue totale étant dépendant des charges variables à travers le temps sur ledit composant observé ou ledit générateur d'éolienne (4) et une réponse structurelle sur eux-mêmes, dans lequel n'importe quel facteur d'utilisation de fatigue totale d'un composant observé ou d'un générateur d'éolienne (4) est une accumulation de tous les facteurs d'utilisation de fatigue partielle dudit composant observé ou dudit générateur d'éolienne (4),
dans lequel les facteurs d'utilisation de fatigue partielle sont calculés par la relation entre les nombres réels d'occurrences pendant une fraction de temps divisés par le nombre d'occurrences permis défini dans une courbe de Wöhler.

2. Procédé de mise en œuvre d'une pluralité de générateurs d'éolienne (4) incluant un premier générateur d'éolienne (4) et un second générateur d'éolienne (4), dans lequel une structure de générateur d'éolienne (6) de chaque générateur d'éolienne (4) de la pluralité de générateurs d'éolienne (4) est pourvue d'un dispositif pour la surveillance de fatigue d'une structure de générateur d'éolienne (6) d'un générateur d'éolienne (4), dans lequel chacun des dispositifs comprend :
au moins un capteur (14) pour la détermination d'au moins une valeur fonction du temps d'un déplacement d'un point de mesure, qui est disposé sur la structure de générateur d'éolienne (6),
dans lequel le dispositif comprend en outre une unité de commande (16), qui est configurée pour déterminer un mouvement dynamique de la structure de générateur d'éolienne (6), dans lequel la au moins une valeur fonction du temps pour le déplacement du au moins un capteur (14) correspond à des données d'entrée pour la détermination du mouvement dynamique particulier,
dans lequel l'unité de commande (16) est configurée en outre pour :
(a) déterminer une charge dans une coupe transversale d'un composant observé de la structure de générateur d'éolienne (6), basée sur des données correspondant au mouvement dynamique de la structure de générateur d'éolienne (6), dans lequel le composant observé est situé à une position arbitraire dans la structure de générateur d'éolienne (6), qui est indépendante du au moins un point de mesure,
(b) déterminer une série temporelle pour la charge dans la coupe transversale du composant observé,
(c) analyser une série temporelle de contrainte, qui est basée sur la série temporelle de charge afin d'évaluer un niveau de fatigue du composant observé indépendant de n'importe quels changements de propriétés particulières mécaniques ou dynamiques du composant observé,
le procédé comprenant les étapes de :
a) détermination d'un premier niveau de fatigue du premier générateur d'éolienne (4) et un second niveau de fatigue du second générateur d'éolienne (4), le premier et le second niveau de fatigue étant basés sur le niveau évalué de fatigue d'un composant observé du générateur d'éolienne (4) respectif déterminé par l'unité de commande (16) du générateur d'éolienne (4) respectif en réalisant les étapes (a) à (c) telles que définies ci-dessus,
b) comparaison du premier niveau de fatigue et du second niveau de fatigue,
c) réglage du générateur d'éolienne (4) ayant un plus haut niveau de fatigue à un mode de fonctionnement qui expose sa structure de générateur d'éolienne (6) à un niveau de contrainte plus faible que la structure de générateur d'éolienne (6) du générateur d'éolienne (4) ayant le niveau le plus faible de fatigue et vice versa,
dans lequel le niveau de fatigue du composant observé ou du générateur d'éolienne (4) est un facteur d'utilisation de fatigue totale dudit composant observé ou ledit générateur d'éolienne (4), ledit facteur d'utilisation de fatigue totale étant dépendant des charges variables à travers le temps sur ledit composant observé ou ledit générateur d'éolienne (4) et une réponse structurelle sur eux-mêmes, dans lequel n'importe quel facteur d'utilisation de fatigue totale d'un composant observé ou d'un générateur d'éolienne (4) est une accumulation de tous les facteurs d'utilisation de fatigue partielle dudit composant observé ou dudit générateur d'éolienne (4),
dans lequel les facteurs d'utilisation de fatigue partielle sont calculés par la relation entre les nombres réels d'occurrences pendant une fraction de temps divisés par le nombre d'occurrences permis défini dans une courbe de Wöhler.

3. Système selon la revendication 1, dans lequel l'unité de commande est configurée en outre pour :
(d) planifier un service de maintenance et/ou déterminer une espérance de vie et/ou déterminer une espérance de vie restante du composant observé, sur la base du niveau évalué de fatigue du composant observé.
